# EUROPÄISCHE PATENTSCHRIFT

(11) **EP 3 529 193 B1**
(45) Veröffentlichungstag und Bekanntmachung des Hinweises auf die Patenterteilung: **07.08.2024**
(21) Anmeldenummer: 17784288.7
(22) Anmeldetag: 16.10.2017
(51) Int. Cl.: B66C 13/46, B66C 13/48, B66C 13/08, B66C 19/00

(54) **VERFAHREN ZUM AUTOMATISCHEN POSITIONIEREN EINES PORTALHUBSTAPLERS FÜR CONTAINER UND PORTALHUBSTAPLER DAFÜR**
METHOD FOR THE AUTOMATIC POSITIONING OF A PORTAL LIFT TRUCK FOR CONTAINERS AND CORRESPONDING PORTAL LIFT TRUCK
PROCÉDÉ POUR LE POSITIONNEMENT AUTOMATIQUE D'UN CHARIOT-PORTAIL-ÉLÉVATEUR POUR CONTENEURS ET CHARIOT-PORTAIL-ÉLÉVATEUR CORRESPONDANT

(30) Priorität: 18.10.2016 DE 102016119839
(43) Veröffentlichungstag der Anmeldung: 28.08.2019
(73) Patentinhaber: Konecranes Global Corporation, 05830 Hyvinkää (FI)
(72) Erfinder: KLEMENT, Stefan, 97222 Rimpar (DE)
(74) Vertreter: Moser Götze & Partner Patentanwälte mbB
(86) Internationale Anmeldenummer: PCT/EP2017/076332
(87) Internationale Veröffentlichungsnummer: WO 2018/073168

(56) Entgegenhaltungen:
- EP-A1- 2 927 178
- WO-A1-2015/121973
- WO-A1-94/05586
- CN-A- 104 085 794
- JP-A- 2011 042 439
- US-A1- 2011 199 099

## Beschreibung

Die Erfindung betrifft ein Verfahren zum Positionieren eines als Straddle Carrier ausgebildeten Portalhubstaplers für Container und eines abzustellenden Containers in einem vorgewählten Abstand hinter einem bereits abgestellten Container, wobei der Portalhubstapler mittels Fahrträgern, Fahrantrieben und einer mit diesen zusammenwirkenden Steuerung verfahren wird und von der Steuerung Messsignale von an dem Portalhubstapler angeordneten Sensoren zum Verfahren und zum Positionieren des Portalhubstaplers und des abzustellenden Containers verarbeitet werden.

Die Erfindung betrifft ferner einen Portalhubstapler für Container, insbesondere zur Durchführung eines Verfahrens zum Positionieren eines Portalhubstaplers, mit Fahrträgern, Fahrantrieben und einer mit diesen zusammenwirkenden Steuerung, mit einem heb- und senkbaren Lastaufnahmemittel für Container, mit mindestens einem Sensor zum Positionieren des Portalhubstaplers und des abzustellenden Containers.

Aus der deutschen Patentschrift DE 10 2008 011 539 B3 ist ein vollautomatischer Portalhubstapler mit lokaler Funkortung und Laserlenkung bekannt. Zur Fahrzeugortung und Navigation ist der Portalhubstapler mit mehreren verschiedenen Sensorsystemen ausgestattet, dessen Signale ausgewertet, überwacht und an ein System von elektronischen Steuerungen übermittelt werden. Die Fahrzeugortung wird über lokale Funkortungssysteme realisiert, welche mit ortsfesten, auf der Betriebsfläche befindlichen Funktranspondern arbeiten. Zur automatischen Lenkung des Portalhubstaplers bei Erreichen eines Containerstapels sind Laserscanner am Fahrzeug angebracht. DE 10 2008 011 539 B3 offenbart den Oberbegriff des Anspruchs 1.

Auch die US-Patentschrift 5,780,826 offenbart eine Container-Umschlags-Vorrichtung, die selbstfahrend ausgelegt ist. Die Container-Umschlags-Vorrichtung ist mit Mitteln ausgestattet, die es erlauben, eine Position des Containers im Container-Lagerplatz zu ermitteln und einen Identifizierungscode, angebracht auf dem Container, zu lesen. Auch umfasst die Container-Umschlags-Vorrichtung ein erstes Mittel zur Erkennung der zweidimensionalen, horizontalen Position des Containers, ein zweites Mittel zur Erkennung einer zusätzlichen, zweidimensionalen, horizontalen Position des Containers sowie ein Mittel zur Erkennung der vertikalen Position des Containers.

Aus der Gebrauchsmusterschrift DE 20 007 016 156 U1 ist ein Portalhubstapler mit automatischer Lenkung zum Transportieren und Stapeln von Containern bekannt. Der Portalhubstapler besteht in üblicher Weise aus einem in Fahrtrichtung des Portalhubstaplers gesehenen U-förmigen Portalrahmen mit vertikalen Portalstützen. An einem unteren Ende der Portalstützen sind zwei Fahrträger mit jeweils mehreren elektrohydraulisch lenkbaren Rädern angeordnet. Um einen Container auf mindestens einem weiteren Container abzusetzen beziehungsweise von mindestens einem weiteren Container aufzunehmen, fährt der Portalhubstapler über einen Container, der alleine oder in einer Reihe von Containern stehen kann. Hierbei bewegen sich die Fahrträger rechts und links entlang eines oder mehrerer Container. Um den Fahrer beim Lenken zu unterstützen, wird eine automatische Lenkung eingesetzt. Hierfür ist vorne an einem der Fahrträger und somit seitlich versetzt zu dem jeweiligen Container ein Laserscanner angeordnet, aus dessen Messsignalen ein Abstand zwischen dem Fahrträger und einer Seitenwand des Containers bestimmt wird. Dies geschieht, indem der Laserscanner Laserstrahlen in horizontale Richtungen in einem Winkelbereich zwischen der Längsachse des Fahrträgers und der Seitenwand des Containers von etwa 55 Grad sendet und diese von einem Hindernis beispielsweise in Form der Seitenwand vor und seitlich des Fahrträgers reflektiert werden. Aus einem Laufzeitunterschied zwischen gesendetem und reflektiertem Strahl wird dann die Entfernung zu dem Hindernis berechnet. Hierbei werden nur Hindernisse in dem genannten Winkelbereich von 55 Grad erfasst, d.h. nur in Bezug auf den Fahrträger vorgelagerte Hindernisse bzw. Seitenwände. Die so gemessenen Entfernungen zur Seitenwand des vorgelagerten Containers und die zugehörigen Messwinkel werden dann an eine elektronische Steuerung übermittelt, die hieraus den Abstand zwischen Fahrträger und Seitenwand des Containers berechnet. Diese Abstände werden bei Bedarf auch für die automatische Lenkung verwendet und hiervon ausgehend Soll-Lenkwinkel zum Einschlagen der Räder berechnet und an den Lenkrechner übermittelt, der das Einschlagen der Räder steuert. Auch die automatische Lenkung des Portalhubstaplers orientiert sich an der Position der vorgelagerten Seitenwände der Container.

Die Schriften CN 104 085 794 A, WO 94/05586 A1, JP 2011 042439 A und EP 2 927 178 A1 offenbaren Portalkrane, die in üblicher Weise einen Brückenträger mit einer Krankatze aufweisen.

Es ist allgemein bekannt, für einen Umschlag von Containern sogenannte Twin-Spreader zu verwenden. Mit einem Twin-Spreader kann ein Portalhubstapler zwei hintereinanderstehende Container gleichzeitig aufnehmen und transportieren. Der Twin-Spreader kann für die Aufnahme zweier hintereinanderstehender Container in einem vorbestimmten Rahmen eine ungenaue Positionierung der beiden abgestellten Container ausgleichen.

Im Sinne der Erfindung werden unter Containern ISO-Container verstanden. ISO-Container wiegen bis zu etwa 38 t und werden allgemein als genormte Großbehälter mit genormten Aufnahmepunkten oder -ecken für Lastaufnahmemittel verstanden. ISO-Container sind üblicherweise 20, 40 oder 45 Fuß lang. Auch ISO-Container in einer Länge von 53 Fuß gibt es bereits. Im Bereich der ISO-Container sind neben den geschlossenen Containern auch Kühl-Container - sogenannte Reefer - und eine Vielzahl anderer Containertypen bekannt.

Der Erfindung liegt die Aufgabe zugrunde, ein Verfahren zum Positionieren eines Portalhubstaplers und einen Portalhubstapler zu schaffen, um den Transportdurchsatz eines Porthubstaplers zu steigern, beispielsweise für einen schnelleren Umschlag von Containern oder eine schnellere Be- und Entladung von Containerschiffen.

Diese Aufgabe wird durch ein Verfahren gemäß Anspruch 1 und einen Portalhubstapler gemäß Anspruch 6 gelöst. Vorteilhafte Ausgestaltungen der Erfindung sind in den Unteransprüchen 2 bis 5 und 7 bis 10 angegeben.

Erfindungsgemäß wird bei einem Verfahren zum Positionieren eines als Straddle Carrier ausgebildeten Portalhubstaplers für Container und eines abzustellenden Containers hinter einem bereits abgestellten Container, wobei der Portalhubstapler mittels Fahrträgern, Fahrantrieben und einer mit diesen zusammenwirkenden Steuerung verfahren wird und von der Steuerung Messsignale von an dem Portalhubstapler angeordneten Sensoren zum Verfahren und zum Positionieren des Portalhubstaplers und des abzustellenden Containers verarbeitet werden, wobei der der Portalhubstapler mittels eines heb- und senkbaren Lastaufnahmemittels einen abzustellenden Container aufnimmt und abstellt, wobei das Lastaufnahmemittel in Form eines Spreaders ausgebildet und entlang von vertikalen Portalstützen eines Portalrahmens des Portalhubstaplers in einer Hub-/Senkrichtung vertikal verfahrbar ist, eine Positionierung hintereinander, welche eine gleichzeitige Aufnahme zweier Container ermöglicht, dadurch erreicht, dass mittels mindestens eines Sensors eine Position einer Rückwand des bereits abgestellten Containers bestimmt wird und anschließend der abzustellende Container von dem Portalhubstapler in einem vorgewählten Abstand hinter den abgestellten Container abgestellt wird.

Durch die Bestimmung der Position einer Rückwand eines bereits abgestellten Containers wird gewährleistet, dass der abzustellende Container mit hoher Genauigkeit hinter dem abgestellten Container positioniert werden kann. Diese Positionierung kann sowohl durch manuelle, als auch automatische oder teilautomatische Betriebsweise erfolgen. Ein Vorteil der Erfindung ist daher, dass hierdurch eine Containerreihe mit geringen Abweichungen gebildet werden und durch eine gleichmäßige und geringe Beabstandung der Container Lagerplatz gespart werden kann.

Im Rahmen der Erfindung wird unter der Bestimmung der Position der Rückwand eines bereits abgestellten Containers eine Messung verstanden, die dazu dient, die Oberkante beziehungsweise Seitenkanten des bereits abgestellten Containers zu erkennen. Insbesondere wird unter Position der Rückwand eine Abstandsmessung zu der Containeroberkante verstanden.

Erfindungsgemäß ist außerdem vorgesehen, dass der abzustellende Container in einer automatischen Betriebsweise selbsttätig mittels einer automatisch wirkenden Steuerung abgestellt wird.

Eine automatische Betriebsweise, in der die Steuerung ohne aktives Eingreifen eines Fahrers den Portalhubstapler und den abzustellenden Container positioniert ist vorteilhaft für eine Entlastung des Fahrers, insbesondere bei aufwändigem Rangieren, welches hoher Konzentration bedarf.

Ein weiterer Vorteil der Erfindung besteht darin, dass die automatische wirkende Steuerung von einem Fahrer aktiviert und deaktiviert wird.

Dadurch ist auch bei einer automatischen Betriebsweise eine Kontrolle durch den Fahrer weiterhin gegeben, da dieser die automatische Betriebsweise manuell aktivieren und deaktivieren kann.

Eine weitere vorteilhafte Ausführung beinhaltet, dass der abzustellende Container in einer manuellen Betriebsweise abgestellt wird, bei der der Portalhubstapler manuell von einem Fahrer mit Unterstützung der von den Sensoren gelieferten Messwerte bedient wird.

Durch eine solche Betriebsweise wird der Fahrer bei der Steuerung des Portalhubstaplers unterstützt und damit entlastet, hat aber gleichzeitig weiterhin die manuelle Kontrolle über den Portalhubstapler. Damit ist bei dieser Betriebsweise ein hohes Maß an Flexibilität gegeben.

Ein weiterer Vorteil der Erfindung besteht darin, dass der Portalhubstapler mittels des heb- und senkbaren Lastaufnahmemittels einen abzustellenden Container aufnimmt und abstellt. Dies erlaubt eine genaue Positionierung des abzustellenden Containers zu einem bereits abgestellten Container und somit die Verwendung eines sogenannten Spreaders im Twin-Betrieb. Um zwei Container gleichzeitig aufzunehmen, müssen beide Container präzise positioniert und zueinander ausgerichtet sein. Ein definierter Abstand der beiden Container zueinander ist entscheidend für die Aufnahme durch einen Spreader im Twin-Betrieb. Der Abstand zwischen zwei Containern beträgt 10 bis 100 mm, insbesondere 30 mm.

Erfindungsgemäß wird bei einem Portalhubstapler für Container, der als Straddle Carrier und zur Durchführung eines erfindungsgemäßen Verfahrens ausgebildet ist, mit Fahrträgern, Fahrantrieben und einer mit diesen zusammenwirkenden Steuerung, mit einem heb- und senkbaren Lastaufnahmemittel für Container, wobei das Lastaufnahmemittel in Form eines Spreaders ausgebildet und entlang von vertikalen Portalstützen eines Portalrahmens des Portalhubstaplers in einer Hub-/Senkrichtung vertikal verfahrbar ist, mit mindestens einem Sensor zum Positionieren des Portalhubstaplers und des abzustellenden Containers, wobei mindestens ein Sensor an dem Portalhubstapler angeordnet ist, mittels dem die Position der Rückwand des bereits abgestellten Containers bestimmbar ist und der abzustellende Container von dem Portalhubstapler in einem vorgewählten Abstand hinter den abgestellten Container abstellbar ist, eine Positionierung hintereinander erreicht, welche eine gleichzeitige Aufnahme zweier Container ermöglicht.

Eine solche Anordnung mindestens eines Sensors am Portalhubstapler ermöglicht eine Erfassung der Rückwand des abgestellten Containers. Nur dann kann der Portalhubstapler in einem vorgewählten Abstand positioniert werden. Dabei ist beispielsweise eine Position des Sensors am Spreader oder den Fahrwerken möglich.

Bevorzugt ist außerdem, dass mindestens zwei Spreadersensoren an relativ zur Vorwärtsfahrtrichtung des Portalhubstaplers vorderen und hinteren Seite des Spreaders und mindestens vier Außensensoren an vier Fahrträgern des Portalhubstaplers zur Bestimmung des Abstands und einer Ausrichtung in Längsrichtung des abgestellten Containers angeordnet sind.

Durch die zwei Spreadersensoren kann somit die Position der Rückwand eines bereits abgestellten Containers relativ zur Vorwärtsfahrtrichtung vor oder hinter dem Portalhubstapler bestimmt werden. Die Außensensoren an den Fahrträgern erlauben zudem, die Ausrichtung des abzustellenden Containers relativ zu seiner Längsachse zu bestimmen. Der Container kann daher gemäß den Messwerten, die die Sensoren liefern, ausgerichtete werden.

Vorteilhaft ist vorgesehen, dass die Spreadersensoren zur Bestimmung der Position der Rückwand eines bereits abgestellten Containers in einem 90° Winkel, das heißt vom Spreader aus in Fahrtrichtung gesehen senkrecht nach unten auf den Boden gerichtet sind. Durch die senkrecht nach unten gerichteten Spreadersensoren ist eine Unterscheidung zwischen Boden und abgestelltem Container und somit eine Erkennung einer Oberkante des bereits abgestellten Containers möglich.

Eine weitere erfindungsgemäße Ausführung sieht vor, dass mindestens vier Außensensoren relativ zur Vorwärtsfahrtrichtung an den vorderen Fahrträgern nach vorn gerichtet und an den hinteren Fahrträgern nach hinten gerichtet und mindestens vier Innensensoren an Fahrträgern des Portalhubstaplers innenliegend zur Bestimmung des Abstands und der Ausrichtung in Längsrichtung des abzustellenden Containers angeordnet sind.

Durch die Außensensoren, welche an den äußeren Enden der Fahrträger angeordnet sind, wird die Position des bereits abgestellten Containers beziehungsweise seiner Rückwand bestimmt. Vier Innensensoren werden zur Bestimmung der Ausrichtung des aufzunehmenden Containers verwendet. Diese Sensoranordnung ist besonders vorteilhaft für die Aufrüstung eines Portalhubstaplers mit bereits vorhandenen Außensensoren für eine automatische Lenkung hin zu einem Portalhubstapler mit automatischer Lenkung und automatischer Ausrichtung eines aufgenommenen Containers. Durch Ergänzung um vier Innensensoren wird eine präzise Lagebestimmung des aufzunehmenden Containers möglich, sodass dieser relativ zu dem bereits abgestellten Container ausgerichtet werden kann.

Eine weitere bevorzugte Variante des Portalhubstaplers umfasst, dass mindestens vier Außensensoren an relativ zur Fahrtrichtung des Portalhubstaplers vorderen und hinteren äußeren Ecken des Spreaders zur Bestimmung des Abstands und der Ausrichtung in Längsrichtung des abgestellten Containers angeordnet sind.

Diese alternative Anordnung der Außensensoren am Spreader ermöglicht ebenfalls eine Erfassung der Seitenwände eines bereits abgestellten Containers bzw. seine Orientierung relativ zu seiner Längsachse und die Ausdehnung beziehungsweise Positions seiner Rückwand.

Zwei Ausführungsbeispiele der Erfindung werden nachfolgend anhand von Zeichnungen näher erläutert. Es zeigen:
Figur 1 eine Vorderansicht des Portalhubstaplers mit einem automatischen Positionierungssystem,
Figur 2 eine Seitenansicht des Portalhubstaplers aus Figur 1,
Figur 3 eine Draufsicht auf den Portalhubstapler aus Figur 1,
Figur 4 eine Blockschaltskizze einer Steuerung des Portalhubstaplers,
Figur 5 eine Vorderansicht des Portalhubstaplers in einer zweiten Ausführungsform,
Figur 6 eine Seitenansicht des Portalhubstaplers aus Figur 5 und
Figur 7 eine Draufsicht auf den Portalhubstapler aus Figur 5.

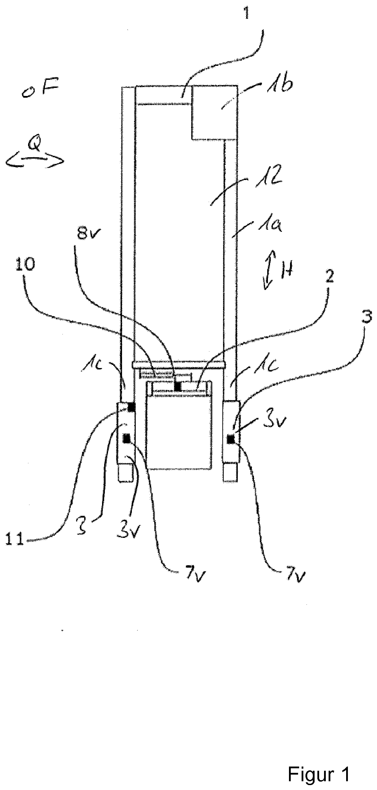

In Figur 1 ist ein mit 1 bezeichneter Portalhubstapler, der auch Straddle Carrier genannt wird, in einer Vorderansicht abgebildet. Der Portalhubstapler 1 umfasst im Wesentlichen einen nach unten offenen U-förmigen Portalrahmen 1a, ein Lastaufnahmemittel in Form eines sogenannten Spreaders 2 und zwei Fahrträger 3. Der Portalrahmen 1a mit dem Fahrträger 3 umschließt einen an drei Seiten offenen und somit nach vorne, hinten und unten offenen Raum 12, welcher zumindest teilweise einen Container 6 oder zwei Container 5 und 6 in einer Vorwärtsfahrtrichtung F des Portalhubstaplers 1 gesehen hintereinander in sich aufnehmen kann. Der Spreader 2 ist entlang von vertikalen Portalstützen 1c des Portalrahmens 1a in einer Hub-/Senkrichtung H vertikal verfahrbar. Am unteren Ende der Portalstützen 1c schließen sich die beiden Fahrträger 3 an. Für eine Ausrichtung des Spreaders 2 beziehungsweise des Containers 5, 6 in einer horizontalen Querrichtung Q, die quer zur Vorwärtsfahrtrichtung F verläuft und eine Drehung des Containers 5, 6 um eine vertikale Achse umfasst der Spreader 2 eine Seitenverschubeinheit 10. Um eine Position einer Oberkante oder einer Rückwand C2, D2 eines Containers 5, 6 zu dem Spreader 2 zu bestimmen, befindet sich am vorderen Bereich des Spreaders 2 ein vorderer Spreadersensor 8v und für Rückwärtsfahrt am hinteren Bereich ein hinterer Spreadersensor 8h, welche in Vorwärtsfahrtrichtung F beziehungsweise gegen die Vorwärtsfahrtrichtung F und insbesondere senkrecht nach unten, in einem 90° Winkel auf den Boden ausgerichtet sind.

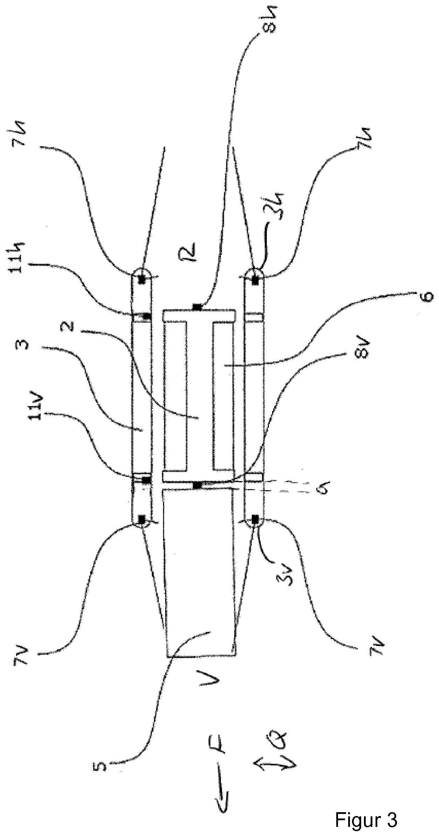

Alternativ zu den Spreadersensoren 8v, 8h befindet sich mindestens ein vorderer Innensensor 11v an einem vorderen Ende 3v und mindestens ein hinterer Innensensor 11h an einem hinteren Ende 3h des Fahrträgers 3 (siehe auch Figur 3). Die Innensensoren 11v, 11h sind an einer Innenseite 3i des Fahrträgers 3 angeordnet, die dem Raum 12 zugewandt ist, und mit ihrer Messrichtung nach innen zu dem Raum 12 gerichtet, das heißt in Richtung eines abgestellten oder abzustellenden Containers 5, 6 zeigend. Für eine Positionsbestimmung des Portalhubstaplers 1 relativ zu einem zu überfahrenden Container 5 befindet sich außerdem je ein vorderer Außensensor 7 - in Vorwärtsfahrtrichtung F zeigend - am vorderen Ende 3v der Fahrträger 3.

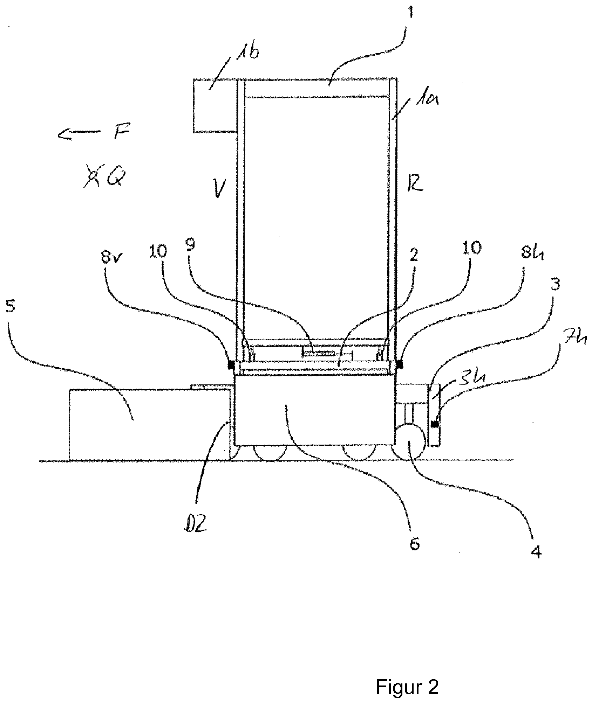

Die Figur 2 zeigt eine Seitenansicht des Portalhubstaplers 1 aus Figur 1, der neben der Seitenverschubeinheit 10 eine Längsverschubeinheit 9 für den Spreader 2 aufweist, welche zur Ausrichtung des Containers 6 in dessen Längsrichtung relativ zu dem Spreader 2 dient. An einer Rückseite R des Portalhubstaplers 1 relativ zur Vorwärtsfahrtrichtung F gesehen sind die hinteren Spreadersensoren 8h und die hinteren Außensensoren 7h an dem Spreader 2 beziehungsweise jeweils an dem hinteren Ende 3h der Fahrträger 3 angeordnet. Diese sind äquivalent zu den Sensoren 7v, 8v der Vorderseite V des Portalhubstaplers 1 und übernehmen deren Funktionen bei einem Wechsel der Fahrrichtung F oder der Abstellrichtung für einen Container 5, 6. Die Fahrträger 3, an denen Fahrantriebe 4 mit gummibereiften Rädern angeordnet sind, befinden sich jeweils an den unteren Enden des Portalrahmens 1a und fahren links und rechts von dem abgestellten und abzustellenden Containern 5, 6. Im oberen Bereich des Portalrahmens 1a und an der Vorderseite V, ist eine Fahrerkabine 1b angeordnet, von der aus ein Fahrer in Richtung der Vorwärtsfahrtrichtung F blickt und den Portalhubstapler 1 bedient. Der vordere Spreadersensor 8v ist senkrecht nach unten, also in einem 90° Winkel auf den Boden gerichtete. Dies dient der Erkennung einer Oberkante beziehungsweise Rückwand D2 und somit der Bestimmung der Position der Rückwand D2 des abgestellten Containers 5. Für einen abgestellten Container 5, der sich in Fahrtrichtung F hinter dem Portalhubstapler 1 befindet (nicht dargestellt), ermöglicht ein senkrecht nach unten gerichteter hinterer Spreadersensor 8h gleichsam die Erkennung einer Oberkante beziehungsweise Rückwand D2 und somit die Bestimmung der Position der Rückwand D2.

In Figur 3 ist eine Draufsicht auf den Portalhubstapler 1 gezeigt und dargestellt, dass mit dem Portalrahmen 1a ein Container 6 überfahren werden kann, welcher nach dem Überfahren entsprechend unterhalb des Spreaders 2 angeordnet ist. Der Spreader 2 ist H-förmig und kann den Container 6 über nicht dargestellte Twist-Locks in seinen vier Eckpunkten 2a bis 2d aufnehmen und anheben. Eine mittlere horizontale Längsachse des Spreaders 2 ist ebenfalls in Richtung der Vorwärtsfahrtrichtung F ausgerichtet, das heißt, dass der abzustellende Container 6 in Längsausrichtung unter dem Portalrahmen 1a angeordnet ist. Alternativ kann der Spreader 2 ein sogenannter Twin-Lift-Spreader sein, welcher entlang seiner horizontalen Längsachse ausfahrbar ist und zwei hintereinander abgestellte Container aufnehmen kann.

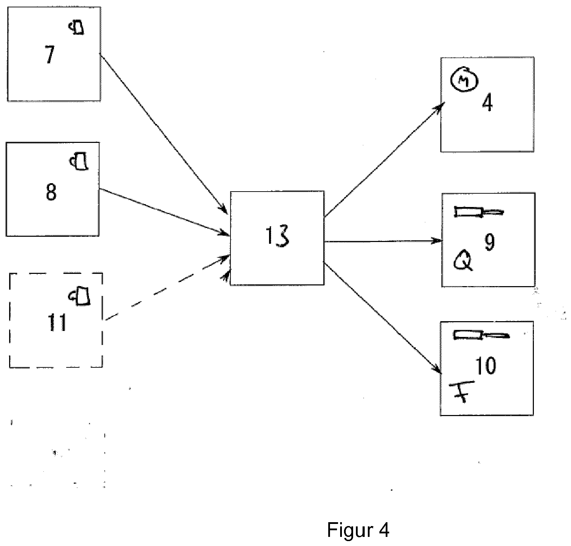

Das in Figur 4 abgebildete Diagramm verdeutlicht die Funktionsweise einer automatischen Positionierung des Containers 6 beziehungsweise des Portalhubstaplers 1. Messdaten der Abstandssensoren 7h, 7v der Spreadersensoren 8h, 8v und der Innensensoren 11h, 11v werden an eine Steuerung 13 des Portalhubstaplers 1 geleitet. Diese berechnet Stellwerte für die Fahrantriebe 4 sowie die Längs- und Seitenverschubeinheiten 9 und 10, welche dann gemäß der Stellwerte gesteuert werden.

Im Folgenden wird die Erfindung ausgehend von einer manuellen Steuerung der Fahrantriebe 4 des Portalhubstaplers 1 erläutert. Hierbei wird der Portalhubstapler 1 von dem Fahrer über einen aufzunehmenden Container 6 gefahren. Mit dem Spreader 2 wird der Container 6 aufgenommen und angehoben. Der Fahrer verfährt darauffolgend den Portalhubstapler 1 in eine gewünschte Position, typischerweise an einem Containerübergabeplatz hinter einen bereits abgestellten Container 5 und senkt den Spreader 2 zum Abstellen des Containers 6 wieder ab. Dabei wird der Portalhubstapler 1 vom Fahrer manuell auf die gewünschte Position gelenkt.

Um eine Entlastung des Fahrers zu erreichen, kann der Fahrer ein automatisches Positioniersystem des Portalhubstaplers 1 für abzustellende Container 6 nutzen. Für die automatische Positionierung des Containers 6 werden die Außensensoren 7h, 7v, die Spreadersensoren 8h, 8v und alternativ die Innensensoren 11h, 11v wie folgt eingesetzt. Durch den Außensensor 7v am Fahrträger 3 wird ein bereits abgestellter Container 5 bei der Annäherung hinsichtlich der Orientierung in Vorwärtsfahrtrichtung F relativ zu einem abzustellenden Container 6 vermessen, das heißt eine etwaige Seitenabweichung des Containers 5 zu dem Container 6 wird gemessen und die Messwerte an eine Steuerung 13 weitergeleitet, welche Stellwerte für die Seitenverschubeinheit 10 berechnet, sodass der abzustellende Container 6 in Bezug auf dessen Längsausrichtung mit dem abgestellten Container 5 bzw. dessen Längsrichtung fluchtet. Die Position einer Hinterkante beziehungsweise Rückwand C2, D2 eines abgestellten Containers 5 wird über den Spreadersensor 8h, 8v oder alternativ über den Innensensor 11h, 11v ermittelt. Der abzusetzende Container 6 wird entsprechend der berechneten Stellwerte seitlich in Querrichtung Q und in Drehrichtung D um eine vertikale Achse durch die Seitenverschubeinheit 10 ausgerichtet. Ein gewünschter Abstand a zwischen abgestelltem Container 5 und abzustellendem Container 6 wird vor dem Abstellen des Containers 6 durch den Fahrantrieb 4 oder die Längsverschubeinheit 9 eingestellt.

Durch eine genaue Positionierung des abgestellten Containers 5 zu dem abzustellenden Container 6 mit einem definierten Abstand a kann der Portalhubstapler 1 in einem sogenannten Twin-Lift-Betrieb betrieben werden. Hierbei ist der Spreader 2 ein sogenannter Twin-Lift-Spreader. Das bedeutet, dass der Spreader 2 zwei hintereinander angeordnete Container aufnehmen kann. Zu diesem Zweck ist der Spreader 2 entlang seiner horizontalen Längsachse ausfahrbar. Der Abstand der Eckpunkte 2a und 2b zu den Eckpunkten 2c und 2d des H-förmigen Spreaders 2 ist im Twin-Lift-Betrieb verdoppelt verglichen zu einen Single-Lift-Betrieb, bei dem der Spreader 2 nicht ausgefahren ist.

Bei den Sensoren 7h, 7v, 8h, 8v und 11h, 11v handelt es sich in einem bevorzugten Ausführungsbeispiel um Lasersensoren. Selbstverständlich sind aber auch andere Sensortypen wie zum Beispiel Infrarotsensoren oder Mikrowellensensoren denkbar. Alle Sensoren 7h, 7v, 8h, 8v und 11h, 11v können selbstverständlich auch Sensoreinheiten sein, d.h. durch mehrere Sensoren ausgeführt sein. Die Lasersensoren können Punktsensoren oder Bereichssensoren sein.

In dem Ausführungsbeispiel ist zwar ein von einem Bediener geführter Portalhubstapler 1 mit einer Fahrerkabine 1b beschrieben, jedoch eignet sich die vorbeschriebene Erfindung auch für den Einsatz mit automatisch geführten Portalhubstaplern 1 oder halbautomatischen Portalhubstaplern 1 mit einer automatischen Lenkung, die nur im Bereich einer Aufnahme und Abgabe der Container 5, 6 verwendet wird.

Die vorhergehend beschriebene Ausführung eignet sich des Weiteren für eine Aufrüstung eines vorhandenen Portalhubstaplers 1, welcher bereits über Außensensoren 7h, 7v an den Fahrträgern 3 für eine automatische Lenkung des Portalhubstaplers 1 verfügt, hin zu einem Portalhubstapler 1 mit automatischer Lenkung und automatischer Ausrichtung eines abzustellenden Containers 6 an einem bereits abgestellten Container 5.

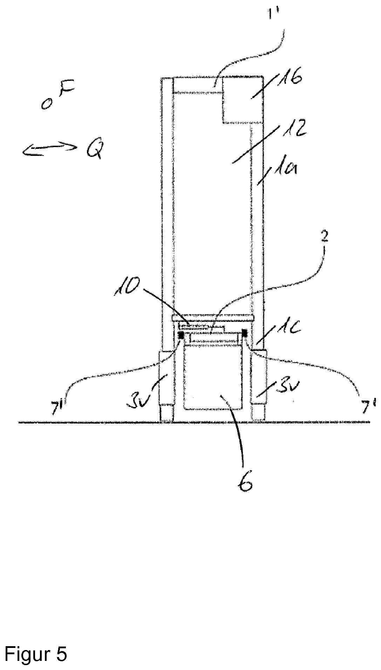

Eine zweite Ausführungsform des Portalhubstaplers ist in den Figuren 5, 6 und 7 gezeigt. Der Portalhubstapler 1' stimmt in allen Komponenten außer in einem Ersatz der Spreadersensoren 8h, 8v und Innensensoren 11h, 11v mit dem Portalhubstapler 1 überein. Daher wird in Bezug auf die vorhandenen Gemeinsamkeiten der beiden Ausführungen auf die Beschreibung zu den Figuren 1 bis 4 verwiesen.

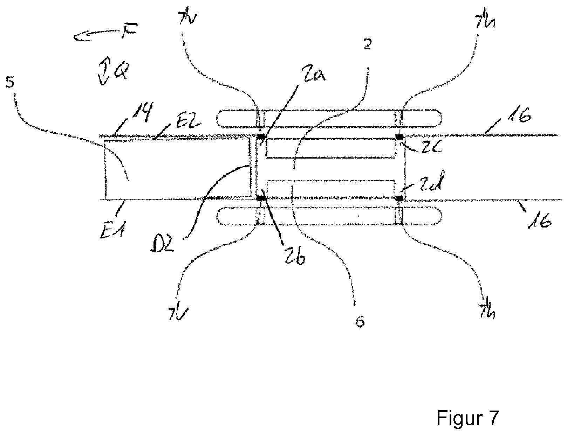

Die Figur 5 zeigt eine Vorderansicht des Portalhubstaplers 1'. Ein automatisches Positionierungssystem umfasst nur die Außensensoren 7'h, 7`v welche jeweils an den relativ zur Vorwärtsfahrtrichtung F gesehen rechten und linken Eckpunkten 2a, 2b, 2c und 2d des H-förmigen Spreaders 2 an der Vorderseite V und Rückseite R (siehe auch Figur 7) angeordnet sind. In Vorwärtsfahrtrichtung F gesehen sind die Außensensoren 7'h, 7`v seitlich neben einem aufgenommenen Container 6 angeordnet und oberhalb eines Zwischenraums zwischen Fahrträger 3 und Container 6.

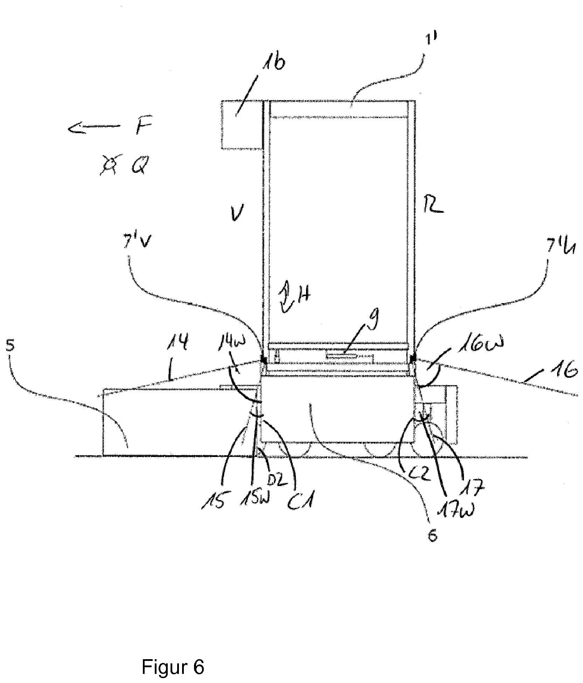

In der Figur 6 dargestellten Ausführung sind die Außensensoren 7'h, 7`v als Punktsensoren ausgebildet und weisen ein nicht dargestelltes Paar von Sensorelementen auf, die in den Eckpunkten 2a und 2b in Vorwärtsfahrtrichtung F und in den Eckpunkten 2c und 2d entgegen der Vorwärtsfahrtrichtung F ausgerichtet sind. Die Sensorelemente 7'h, 7`v scannen dabei je Eckpunkt 2a bis 2d in zwei Sensorrichtungen 14, 16 und 15, 17. Sensorrichtung 14 ist in Vorwärtsfahrtrichtung F und leicht nach unten orientiert und schließt dabei mit einer gedachten Horizontalen durch den Außensensor 7'v einen Winkel 14w von etwa 10 Grad ein. Dieser Winkel 14w ist so gewählt, dass der Außensensor 7'v eine Ausrichtung des abgestellten und somit dem Portalhubstapler 1 vorgelagerten Containers 5 erfassen kann. Sensorrichtung 15 ist in Vorwärtsfahrtrichtung F und stark nach unten orientiert und schließt dabei mit einer gedachten Horizontalen durch den Außensensor 7'v einen Winkel 15w von etwa 80 Grad ein. Für die Sensorrichtungen 16, 17 gilt das zu den Sensorrichtungen 14, 15 Vorbeschriebene, wobei die Abtastrichtung gegen die Vorwärtsfahrtrichtung F gerichtet ist. Die Sensoren 7'h, 7'v, welche in Sensorrichtung 15 und 17 ausgerichtet sind, erfassen damit eine Rückwand D2 des nächsten abgestellten Containers 5 oder ein anderes rückwärtiges Hindernis (nicht abgebildet).

Die Figur 7 zeigt, dass die Außensensoren 7'h, 7'v, welche in Sensorrichtung 14 und 16 ausgerichtet sind, Seitenwände E1 und E2 des nächsten Containers 5 bzw. eine seitliche Ausdehnung eines anderen rückwärtigen Hindernisses (nicht abgebildet) erfassen. Durch Bestimmung der Position beziehungsweise Ausrichtung der Rückwand D2 und der Seitenwände E1 und E2 des nächsten abgestellten Containers 5 und Weiterleitung gemessener Werte an die Steuerung 13 des Portalhubstaplers 1', welche Stellwerte für die Fahrantriebe 4, die Längsverschubeinheit 9 und die Seitenverschubeinheit 10 berechnet, wird der Container 6 an dem nächsten abgestellten Container 5 automatisch ausgerichtet und kann in einem vorher bestimmten Abstand a, der 10 bis 100 mm, insbesondere 30 mm beträgt, hinter dem abgestellten Container 6 angestellt werden.

Die vorhergehend beschriebene Ausführung eines Portalhubstaplers 1' mit einem automatischen Positionierungssystem eignet sich besonders für die Aufrüstung eines manuellen Portalhubstaplers ohne automatische Lenkung oder Positionierung.

### Bezugszeichen

1, 1' Portalhubstapler
1a Portalrahmen
1b Fahrerkabine
1c Portalstützen
2 Spreader
2a, 2c rechte Eckpunkte
2b, 2d linke Eckpunkte
3 Fahrträger
3v vorderes Ende
3h hinteres Ende
4 Fahrantriebe
5 abgestellter Container
6 abzustellender Container
7 Außensensor
7v, 7'v vordere Außensensoren
7h, 7'h hintere Außensensoren
8v vorderer Spreadersensor
8h hinterer Spreadersensor
9 Längsverschubeinheit
10 Seitenverschubeinheit
11v vorderer Innensensor
11h hinterer Innensensor
12 Raum
13 Steuerung
14 erste Sensorrichtung vorn
15 zweite Sensorrichtung vorn
16 erste Sensorrichtung hinten
17 zweite Sensorrichtung hinten
14w erster Sensorwinkel vorn
15w zweiter Sensorwinkel vorn
16w erster Sensorwinkel hinten
17w zweiter Sensorwinkel hinten
a Abstand
C1 Vorderwand des Containers 6
C2 Rückwand des Containers 6
D Drehrichtung
D2 Rückwand des Containers 5
E1 erste Seitenwand
E2 zweite Seitenwand
F Vorwärtsfahrtrichtung
H Hub-/Senkrichtung
Q Querrichtung
V Vorderseite
R Rückseite

## Patentansprüche

1. Verfahren zum Positionieren eines als Straddle Carrier ausgebildeten Portalhubstaplers (1, 1') für Container und eines abzustellenden Containers (6) hinter einem bereits abgestellten Container (5), wobei der Portalhubstapler (1, 1') mittels Fahrträgern (3), Fahrantrieben (4) und einer mit diesen zusammenwirkenden Steuerung (13) verfahren wird und von der Steuerung (13) Messsignale von an dem Portalhubstapler (1, 1') angeordneten Sensoren (7v, 7v', 7h, 7h', 8v, 8h, 11v, 11h) zum Verfahren und zum Positionieren des Portalhubstaplers (1, 1') und des abzustellenden Containers (6) verarbeitet werden, wobei der der Portalhubstapler (1, 1') mittels eines heb- und senkbaren Lastaufnahmemittels (2) einen abzustellenden Container (6) aufnimmt und abstellt, wobei das Lastaufnahmemittel (2) in Form eines Spreaders ausgebildet und entlang von vertikalen Portalstützen (1c) eines Portalrahmens (1a) des Portalhubstaplers (1, 1') in einer Hub-/Senkrichtung (H) vertikal verfahrbar ist, **dadurch gekennzeichnet, dass** mittels mindestens eines Sensors (7v, 7v', 7h, 7h', 8v, 8h, 11v, 11h) eine Position einer Rückwand (D2) des bereits abgestellten Containers (5) bestimmt wird und anschließend der abzustellende Container (6) von dem Portalhubstapler (1, 1') in einem vorgewählten Abstand (a) hinter den abgestellten Container (5) abgestellt wird.

2. Verfahren nach Anspruch 1, **dadurch gekennzeichnet, dass** der abzustellende Container (6) in einer automatischen Betriebsweise selbsttätig mittels einer automatisch wirkenden Steuerung (13) abgestellt wird.

3. Verfahren nach Anspruch 2, **dadurch gekennzeichnet, dass** die automatische wirkende Steuerung (13) von einem Fahrer aktiviert und deaktiviert wird.

4. Verfahren nach Anspruch 1, **dadurch gekennzeichnet, dass** der abzustellende Container (6) in einer manuellen Betriebsweise abgestellt wird, bei der der Portalhubstapler (1, 1') manuell von einem Fahrer mit Unterstützung der von den Sensoren (7v, 7v', 7h, 7h', 8v, 8h, 11v, 11h) gelieferten Messwerte bedient wird.

5. Verfahren nach Anspruch 1 bis 4, **dadurch gekennzeichnet, dass** der Spreader eine Seitenverschubeinheit (10) zur Ausrichtung des Containers (6) in einer horizontalen Querrichtung (Q), die quer zur Vorwärtsrichtung (F) verläuft, und in einer Drehrichtung (D) um eine vertikale Achse sowie eine Längsverschubeinheit (9) zur Ausrichtung des Containers (6) in dessen Längsrichtung relativ zu dem Spreader umfasst.

6. Portalhubstapler (1, 1') für Container, der als Straddle Carrier und zur Durchführung eines Verfahrens gemäß einem der Ansprüche 1 bis 5 ausgebildet ist, mit Fahrträgern (3), Fahrantrieben (4) und einer mit diesen zusammenwirkenden Steuerung (13), mit einem heb- und senkbaren Lastaufnahmemittel (2) für Container, wobei das Lastaufnahmemittel (2) in Form eines Spreaders ausgebildet und entlang von vertikalen Portalstützen (1c) eines Portalrahmens (1a) des Portalhubstaplers (1, 1') in einer Hub-/Senkrichtung (H) vertikal verfahrbar ist, mit mindestens einem Sensor (7v, 7v', 7h, 7h', 8v, 8h, 11v, 11h) zum Positionieren des Portalhubstaplers (1, 1') und des abzustellenden Containers (6), wobei mindestens ein Sensor (7v, 7v', 7h, 7h', 8v, 8h, 11v, 11h) an dem Portalhubstapler (1, 1') angeordnet ist, mittels dem die Position der Rückwand (D2) des bereits abgestellten Containers bestimmbar ist und der abzustellende Container (6) von dem Portalhubstapler (1, 1') in einem vorgewählten Abstand (a) hinter den abgestellten Container (5) abstellbar ist.

7. Portalhubstapler (1) nach Anspruch 6, **dadurch gekennzeichnet, dass** mindestens zwei Spreadersensoren (8v, 8h) an relativ zur Vorwärtsfahrtrichtung (F) des Portalhubstaplers (1) vorderen und hinteren Seite des Spreaders (2) und mindestens vier Außensensoren (7v, 7h) an vier Fahrträgern (3) des Portalhubstaplers (1) zur Bestimmung des Abstands (a) und einer Ausrichtung in Längsrichtung des abgestellten Containers (5) angeordnet sind.

8. Portalhubstapler (1) nach einem der Ansprüche 6 oder 7, **dadurch gekennzeichnet, dass** die Spreadersensoren (8v, 8h) zur Erkennung einer Oberkante beziehungsweise Rückwand (D2) des abgestellten Containers (5) senkrecht nach unten auf den Boden ausgerichtet sind.

9. Portalhubstapler (1) nach Anspruch 6, **dadurch gekennzeichnet, dass** mindestens vier Außensensoren (7v, 7h) relativ zur Vorwärtsfahrtrichtung (F) an den vorderen Fahrträgern nach vorn gerichtet und an den hinteren Fahrträgern nach hinten gerichtet und mindestens vier Innensensoren (11v, 11h) an Fahrträgern (3) des Portalhubstaplers (1) innenliegend zur Bestimmung des Abstands (a) und der Ausrichtung in Längsrichtung des abzustellenden Containers (6) angeordnet sind.

10. Portalhubstapler (1') nach Anspruch 6, **dadurch gekennzeichnet, dass** mindestens vier Außensensoren (7`v, 7`h) an relativ zur Fahrtrichtung des Portalhubstaplers vorderen und hinteren äußeren Ecken (2a, 2b, 2c, 2d) des Spreaders (2) zur Bestimmung des Abstands (a) und der Ausrichtung in Längsrichtung des abgestellten Containers (5) angeordnet sind.

## Claims

1. Method for the positioning of a gantry lift stacker (1, 1'), designed as a straddle carrier, for containers in order to position a container (6) to be set down behind an already set-down container (5), wherein the gantry lift stacker (1, 1') is moved by means of travel supports (3), travel drives (4) and a controller (13) cooperating therewith, and measurement signals from sensors (7v, 7v', 7h, 7h', 8v, 8h, 11v, 11h) disposed on the gantry lift stacker (1, 1') are processed by the controller (13) for the purpose of moving and positioning the gantry lift stacker (1, 1') and the container (6) to be set down, wherein the gantry lift stacker (1, 1') by means of a load picking-up means (2) which can be raised and lowered, picks up and sets down a container (6) to be set down, wherein the load picking-up means (2) is designed in form of a spreader and can be moved vertically along vertical gantry struts (1c) of a gantry frame (1a) of the gantry lift stacker (1, 1') in a raising/lowering direction (H), **characterised in that** by means of at least one sensor (7v, 7v', 7h, 7h', 8v, 8h, 11v, 11h) a position of a rear wall (D2) of one of the already set-down container (5) is determined and then the container (6) to be set down is set down by the gantry lift stacker (1, 1') at a preselected distance (a) behind the set-down container (5).

2. Method as claimed in claim 1, **characterised in that**, in automatic operation, the container (6) to be set down is set down automatically by means of an automatically acting controller (13).

3. Method as claimed in claim 2, **characterised in that** the automatically acting controller (13) is activated and deactivated by a driver.

4. Method as claimed in claim 1, **characterised in that** the container (6) to be set down is set down in a manual operation mode in which the gantry lift stacker (1, 1') is operated manually by a driver with assistance from the measured values supplied by the sensors (7v, 7v', 7h, 7h', 8v, 8h, 11v, 11h).

5. Method as claimed in claim 1 to 4, **characterised in that** the spreader comprises a lateral thrust unit (10) which serves to orientate the container (6) in a horizontal transverse direction (Q), extending transversely to the forwards direction (F), and in a rotational direction (D) about a vertical axis, and a longitudinal thrust unit (9), which serves to orientate the container (6) in the longitudinal direction thereof relative to the spreader.

6. Gantry lift stacker (1, 1') for containers, which is designed as a straddle carrier and for implementation of a method as claimed in any one of claims 1 to 5, having travel supports (3), travel drives (4) and a controller (13) cooperating therewith, having a load picking-up means (2), which can be raised and lowered, for containers, wherein the load picking-up means (2) is designed in form of a spreader and can be moved vertically along vertical gantry struts (1c) of a gantry frame (1a) of the gantry lift stacker (1, 1') in a raising/lowering direction (H), having at least one sensor (7v, 7v', 7h, 7h', 8v, 8h, 11v, 11h) for positioning the gantry lift stacker (1, 1') and the container (6) to be set down, wherein at least one sensor (7v, 7v', 7h, 7h', 8v, 8h, 11v, 11h) is disposed on the gantry lift stacker (1, 1'), by means of which a position of a rear wall (D2) of the already set-down container can be determined, and the container (6) to be set down can be set down from the gantry lift stacker (1, 1') at a preselected distance (a) behind the set-down container (5).

7. Gantry lift stacker (1) as claimed in claim 6, **characterised in that** at least two spreader sensors (8v, 8h) are disposed on the front and rear face of the spreader (2) relative to the forwards travel direction (F) of the gantry lift stacker (1) and at least four outer sensors (7v, 7h) are disposed on four travel supports (3) of the gantry lift stacker (1) in order to determine the distance (a) and an orientation in the longitudinal direction of the set-down container (5).

8. Gantry lift stacker (1) as claimed in any one of claims 6 or 7, **characterised in that** the spreader sensors (8v, 8h) for detecting an upper edge or rear wall (D2) of the set-down container (5) are orientated perpendicularly downwards to the ground.

9. Gantry lift stacker (1) as claimed in claim 6, **characterised in that** at least four outer sensors (7v, 7h) are disposed orientated forwards on the front travel supports and orientated rearwards on the rear travel supports relative to the forwards travel direction (F), and at least four inner sensors (11v, 11h) are disposed inwardly on travel supports (3) of the gantry lift stacker (1) in order to determine the distance (a) and orientation in the longitudinal direction of the container (6) to be set down.

10. Gantry lift stacker (1') as claimed in claim 6, **characterised in that** at least four outer sensors (7'v, 7'h) are disposed at front and rear outer corners (2a, 2b, 2c, 2d) of the spreader (2) relative to the travel direction of the gantry lift stacker in order to determine the distance (a) and orientation in the longitudinal direction of the set-down container (5).

## Revendications

1. Procédé de positionnement d'un chariot élévateur à portique (1, 1'), conçu comme un chariot cavalier et destiné à des conteneurs, et d'un conteneur à déposer (6) derrière un conteneur déjà déposé (5), le chariot élévateur à portique (1, 1') étant déplacé au moyen de supports de déplacement (3), d'entraînements de déplacement (4) et d'une commande (13) qui coopère avec ceux-ci, et des signaux de mesure provenant de capteurs (7v, 7v', 7h, 7h', 8v, 8h, 11v, 11h), disposés sur le chariot élévateur à portique (1, 1'), étant traités par la commande (13) afin de déplacer et positionner le chariot élévateur à portique (1, 1') et le conteneur à déposer (6), le chariot élévateur à portique (1, 1') recevant et déposant un conteneur à déposer (6) à l'aide d'un moyen de réception de charge (2) pouvant être levé et abaissé, le moyen de réception de charge (2) étant conçu sous la forme d'un palonnier et pouvant être déplacé verticalement le long de montants de portique verticaux (1c) d'un cadre de portique (1a) du chariot élévateur à portique (1, 1') dans une direction de levage/d'abaissement (H), **caractérisé en ce qu'**une position d'une paroi arrière (D2) du conteneur déjà déposé (5) est déterminée à l'aide d'au moins un capteur (7v, 7v', 7h, 7h', 8v, 8h, 11v, 11h), puis le conteneur à déposer (6) est déposé par le chariot élévateur à portique (1, 1') à une distance prédéfinie (a) derrière le conteneur déposé (5).

2. Procédé selon la revendication 1, **caractérisé en ce que** le conteneur à déposer (6) est déposé automatiquement dans un mode de fonctionnement automatique à l'aide d'une commande à action automatique (13).

3. Procédé selon la revendication 2, **caractérisé en ce que** la commande à action automatique (13) est activée et désactivée par un conducteur.

4. Procédé selon la revendication 1, **caractérisé en ce que** le conteneur à déposer (6) est déposé dans un mode de fonctionnement manuel dans lequel le chariot élévateur à portique (1, 1') est mis en oeuvre manuellement par un conducteur avec l'appui des valeurs de mesure fournies par les capteurs (7v, 7v', 7h, 7h', 8v, 8h, 11v, 11h).

5. Procédé selon la revendication 1 à 4, **caractérisé en ce que** le palonnier comprend une unité de déplacement latéral (10) destinée à orienter le conteneur (6) dans une direction transversale horizontale (Q), qui s'étend transversalement à la direction d'avancement (F), et dans une direction de rotation (D) autour d'un axe vertical et une unité de déplacement longitudinal (9) destinée à orienter le conteneur (6) dans sa direction longitudinale par rapport au palonnier.

6. Chariot élévateur à portique (1,1') destiné à des conteneurs, lequel fonctionne comme chariot cavalier et est conçu pour mettre en oeuvre un procédé selon l'une des revendications 1 à 5, ledit chariot élévateur à portique comprenant des supports de déplacement (3), des entraînements de déplacement (4) et une commande (13) qui coopère avec ceux-ci, un moyen de réception de charge (2) qui est destiné à des conteneurs et qui peut être levé et abaissé, le moyen de réception de charge (2) étant conçu sous la forme d'un palonnier et pouvant être déplacé verticalement le long de montants de portique verticaux (1c) d'un cadre de portique (1a) du chariot élévateur à portique (1, 1') dans une direction de levage/d'abaissement (H), au moins un capteur (7v, 7v', 7h, 7h', 8v, 8h, 11v, 11h) destiné à positionner le chariot élévateur à portique (1, 1') et le conteneur à déposer (6), au moins un capteur (7v, 7v', 7h, 7h', 8v, 8h, 11v, 11h) étant disposé sur le chariot élévateur à portique (1, 1') et permettant de déterminer la position de la paroi arrière (D2) du conteneur déjà déposé et le conteneur à déposer (6) pouvant être déposé par le chariot élévateur à portique (1, 1') à une distance prédéfinie (a) derrière le conteneur déposé (5).

7. Chariot élévateur à portique (1) selon la revendication 6, **caractérisé en ce qu'**au moins deux capteurs de palonnier (8v, 8h) sont disposés sur des côtés avant et arrière du palonnier (2) par rapport à la direction d'avancement (F) du chariot élévateur à portique (1) et au moins quatre capteurs extérieurs (7v, 7h) sont disposés sur quatre supports de déplacement (3) du chariot élévateur à portique (1) afin de déterminer la distance (a) et une orientation dans la direction longitudinale du conteneur déposé (5).

8. Chariot élévateur à portique (1) selon l'une des revendications 6 ou 7, **caractérisé en ce que** les capteurs de palonnier (8v, 8h) sont orientés vers le bas perpendiculairement au sol afin de détecter un bord supérieur ou une paroi arrière (D2) du conteneur déposé (5).

9. Chariot élévateur à portique (1) selon la revendication 6, **caractérisé en ce qu'**au moins quatre capteurs extérieurs (7v, 7h) sont dirigés vers l'avant par rapport à la direction d'avancement (F) sur les supports de déplacement avant et sont dirigés vers l'arrière sur les supports de déplacement arrière et au moins quatre capteurs intérieurs (11v, 11h) sont disposés à l'intérieur sur des supports de déplacement (3) du chariot élévateur à portique (1) afin de déterminer la distance (a) et l'orientation dans la direction longitudinale du conteneur à déposer (6).

10. Chariot élévateur à portique (1l) selon la revendication 6, **caractérisé en ce qu'**au moins quatre capteurs extérieurs (7'v, 7'h) sont disposés aux coins extérieurs avant et arrière (2a, 2b, 2c, 2d) du palonnier (2) par rapport à la direction de déplacement du chariot élévateur à portique afin de déterminer la distance (a) et l'orientation dans la direction longitudinale du conteneur déposé (5).
